# EUROPÄISCHE PATENTSCHRIFT

(11) **EP 0 531 607 B1**
(45) Veröffentlichungstag und Bekanntmachung des Hinweises auf die Patenterteilung: **20.09.1995**
(21) Anmeldenummer: 92104281.8
(22) Anmeldetag: 12.03.1992
(51) Int. Cl.: B29C 47/40, B29K 19/00

(54) **Verfahren zur kontinuierlichen Herstellung von Kautschukmischungen in einem Doppelschnekkenextruder**
Method for the continuous production of rubber mixtures in a twin-screw extruder
Procédé pour la fabrication de mélanges de caoutchouc dans une extrudeuse double vis

(30) Priorität: 12.09.1991 DE 4130314
(43) Veröffentlichungstag der Anmeldung: 17.03.1993
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3012 Langenhagen 6 (DE); Mayer, Dieter, Dipl.-Ing., W-3000 Hannover 91 (DE); Schaarschmidt, Holger, Dipl.-Ing., W-3000 Hannover 1 (DE); Wolff, Markus-Michael, Dipl.-Ing., W-3167 Burgdorf (DE)

(56) Entgegenhaltungen:
- CH-A- 536 655
- DE-A- 1 604 396
- DE-A- 1 954 214
- DE-A- 3 042 427
- FR-A- 1 570 371
- FR-A- 2 235 154
- PATENT ABSTRACTS OF JAPAN vol. 11, no. 86 (M-572)(2533) 17. M rz 1987

## Beschreibung

Die Erfindung betrifft ein Verfahren zur kontinuierlichen Herstellung von Kautschukmischungen in einem Doppelschneckenextruder gemäß dem Oberbegriff des Anspruchs 1.

Aus der DE-PS 37 29 237 ist ein gattungsgemäßes Verfahren bekannt, bei dem Kautschuk in einem Doppelschneckenextruder mit Füllstoffen, Ölen, Hilfsstoffen und Vernetzungsmitteln kontinuierlich zu einer Kautschukmischung verarbeitbar ist. Dabei wird zerkleinerter Kautschuk in den Extruder zusammen mit einem Verarbeitungshilfsmittel eingegeben und entlang eines ersten Schneckenabschnittes mastifiziert. Am Ende dieses ersten Schneckenabschnittes gelangt durch eine zweite Einspeiseöffnung im Extruder der gesamte Füllstoff (Ruß, Weichmacheröle sowie die anderen Hilfsstoffe und Vernetzungsmittel) in das Extrudat, das in diesem Bereich eine Temperatur von ca. 60° bis 80° C aufweist.

Alle diese Mischungsbestandteile werden dann entlag dieses zweiten Extruderabschnittes mit dem Kautschuk vermischt bevor diese Mischung in einem dritten Extruderabschnitt homogenisiert wird.

Die nach diesem Verfahren durchgeführten Mischversuche waren zwar befriedigend, obwohl wegen der Einmischung von Ruß und den Hilfsstoffen in nur einem Einspeisevorgang eine vergleichweise langwierige Homogenisierungsphase notwendig wurde. Dies hatte einen hohen spezifischen Energiebedarf für die Herstellung der Kautschukmischung zur Folge.

Durch die FR-A-2 235 154 ist es auch bereits bekannt geworden, Kunststoffe mittels eines Extruders einzufärben, wobei der Rußanteil dem Extruder an zwei verschiedenen Streckenteilen zugeführt wird. Hier wird zwar bereits eine gleichmäßigere Verteilung der Rußanteile erreicht, die Rußeinbettung geschieht jedoch ausschließlich zum Zweck einer Einfärbung der Kunststoffe.

Die Aufgabe der Erfindung ist es, bei einem gattungsgemäßen Verfahren bei einem niedrigen spezifischen Energiebedarf eine bessere Rußeinmischung in das Extrudat zu erreichen.

Die Lösung dieser Aufgabe ergibt sich aus den Merkmalen des Anspruchs 1. Vorteilhafte Weiterbildungen des Verfahrens sind den Unteransprüchen zu entnehmen.

Mit dem vorgeschlagenen Verfahren läßt sich das kontinuierliche Herstellen von Kautschukmischungen in Doppelschneckenextrudern verbessern. Dies wird vor allem dadurch erreicht, daß der zusammen mit einem Verarbeitungshilfgsmittel (z.B. Zinkoxyd) in den Extruder eingefüllte Kautschuk in einem ersten Verfahrensschritt mastifiziert und auf eine Temperatur von 150°C bis 180° C gebracht wird.

Eine im Extrudergehäuse angebrachte und an sich bekannte einstellbare Druckblende sorgt dabei für eine Druckerhöhung und ein schnelles Ansteigen der Extrudattemperatur.

Anschließend wird der Kautschukmischung ein erster Rußanteil (A) zugeführt, der etwa 10 % bis 80 %, vorzugsweise 40 % bis 80 %, des insgesamt einzubringenden Rußanteiles ausmacht. Dieser Rußanteil wird im weiteren Verfahrensablauf in den Kautschuk eingemischt und anschliessend mit Weichmacherölen versehen, die ebenfalls in die Mischung eingearbeitet werden.

Über eine weitere Öffnung im Extrudergehäuse gelangt schließlich der restliche Ruß (Rußanteil (B)) bei einer Extrudattemperatur von 150° bis 180° C in das Extrudat und wird mit diesem vermischt. Letztlich wird die Extrudattemperatur auf 100° bis 120° C verringert, bevor das Vernetzungsmittel beigegeben und die Gesamtmischung im Extruder homogenisiert wird.

Durch die Aufteilung der Rußmenge in zwei Zugabemengen, läßt sich diese leichter in das Extrudat einmischen. Hinzu kommt, daß das Einmischen der Rußanteiles (A) und (B) in die jeweils ca. 150° - 180° C heiße Kautschukmischung jedenfalls bei der Anwendung dieses Verfahrens auf einem Doppelschneckenextruder zu einem ausgezeichneten Rußdispersionsgrad führt.

## Patentansprüche

1. Verfahren zur kontinuierlichen Herstellung von Kautschukmischungen in einem Doppelschneckenextruder, bei dem Kautschuk zusammen mit einem Verarbeitungshilfsmittel in einen Doppelschneckenextruder eingefüllt und mastifiziert wird und bei dem anschließend in diesen mastifizierten und erwärmten Kautschuk Ruß und Verarbeitungs-, Hilfs- und Füllstoffe sowie Vernetzungsmittel eingemischt und zu einer Kautschukmischung verarbeitet werden,
gekennzeichnet durch die Verfahrensschritte:
- Einfüllen des Kautschuks und eines Verarbeitungshilfsmittels in den Doppelschneckenextruder,
- Mastifizieren und Erwärmen des Kautschuks auf eine Temperatur von 150° bis 180° C durch Aufstauen des Kautschuks mittels einer einstellbaren Extruderdrossel im Verfahrensteil des Extruders,
- Einfüllen und Einmischen eines ersten Rußanteiles (A) in den mastifizierten und temperierten Kautschuk bei einer Mischungstemperatur von 150°C bis 180°C,
- Einspritzen und Einmischen von Weichmacherölen in die Mischung,
- Einfüllen und Einmischen eines zweiten Rußanteiles (B) in die Mischung bei einer Mischungstemperatur von 150° bis 180° C,
- Abkühlen der Mischung auf 100° bis 120° C,
- Einbringen und Einmischen eines Vernetzungsmittels in die Mischung.
- Homogenisieren uns Ausspritzen des Extrudates.

2. Verfahren nach Anspruch 1,
**dadurch gekennzeichnet,**
daß das Verarbeitungshilfsmittel Zinkoxyd ist.

3. Verfahren nach Anspruch 1 oder 2,
**dadurch gekennzeichnet,**
daß der erste Rußanteil (A) 10 % bis 80 %, vorzugsweise 40 % bis 80 % des Gesamtrußeintrags in das Extrudat umfaßt.

## Claims

1. Process for the continuous production of rubber compounds with a twin-screw extruder, the rubber being fed into and masticated in a twin-screw extruder together with a processing aid; carbon black, processing aids, auxiliary substances, fillers, and crosslinking agents being subsequently incorporated into the masticated and heated rubber and converted into a rubber compound,
characterized by the following process steps:
- feeding of rubber and a processing aid into the twin-screw extruder,
- masticating and heating the rubber to a temperature of 150°C to 180°C by retaining the rubber via an adjustable extruder throttle in the processing section of the extruder,
- feeding and incorporating a first share of carbon black (A) into the masticated and heated rubber which presents a temperature of 150°C to 180°C,
- injecting and incorporating plasticizing oils into the compound,
- feeding and incorporating a second share (B) of carbon black into the compound at a compound temperature of 150°C to 180°C,
- cooling down the compound to 100°C to 120°C,
- adding a crosslinking agent and incorporating it into the compound,
- homogenizing and extruding the material processed.

2. A process as recited in claim 1,
**characterized in that**
zinc oxide serves as a processing aid.

3. A process as recited in claim 1 or 2,
**characterized in that**
the first carbon black share (A) represents 10% to 80% - preferably 40% to 80% - of the whole quantity of carbon black to be added to the material processed.

## Revendications

1. Procédé de fabrication en continu de mélanges caoutchouc dans une extrudeuse double-vis, le caoutchouc étant introduit et mastiqué en commun avec un agent de mise en oeuvre dans une extrudeuse double-vis; et le noir de carbone, les agents de mise en oeuvre, les adjuvants et les charges ainsi que les agents de réticulation étant ensuite introduits dans ce caoutchouc, mastiqué et chauffé, et transformés en un mélange caoutchouc,
caractérisé en ce que les étapes de procédé sont les suivantes:
- Introduction du caoutchouc et d'un agent de mise en oeuvre dans l'extrudeuse double-vis,
- Mastication et chauffage du caoutchouc à une température de 150° à 180° C par refoulement du caoutchouc au moyen d'un dispositif d'étranglement ajustable se trouvant dans la partie active de l'extrudeuse,
- Introduction et incorporation d'une première partie du noir de carbone (A) dans le caoutchouc mastiqué et chauffé à une température de 150° C à 180° C,
- Injection et incorporation d'huiles plastifiantes dans le mélange,
- Introduction et incorporation d'une deuxième partie du noir de carbone (B) dans le mélange ayant une température de 150° à 180° C,
- Refroidissement du mélange à une température de 100° à 120° C,
- Introduction et incorporation d'un agent de réticulation dans le mélange,
- Homogénéisation et extrusion du mélange.

2. Procédé selon revendication 1,
**caractérisé en ce que**
l'agent de mise en oeuvre est de l'oxyde de zinc.

3. Procédé selon revendication 1 ou 2,
**caractérisé en ce que**
la première partie du noir de carbone (A) représente 10 % à 80 %, de préférence 40 % à 80 %, de la quantité totale du noir de carbone à introduire dans le mélange.
